# EUROPEAN PATENT SPECIFICATION

(11) **EP 3 098 077 B1**
(45) Date of publication and mention of the grant of the patent: **22.09.2021**
(21) Application number: 14879043.9
(22) Date of filing: 28.03.2014
(51) Int. Cl.: B41J 2/175, G06F 21/60, G06F 21/73

(54) **IMAGING CARTRIDGE MEMORY CHIP PARAMETER SENDING METHOD, MEMORY CHIP, AND IMAGING CARTRIDGE**
SENDEVERFAHREN FÜR SPEICHERPARAMETER EINER BILDGEBUNGSKARTUSCHE, SPEICHERCHIP UND BILDGEBUNGSKARTUSCHE
PROCÉDÉ D'ENVOI DE PARAMÈTRE DE PUCE MÉMOIRE DE CARTOUCHE D'IMAGERIE, PUCE MÉMOIRE, ET CARTOUCHE D'IMAGERIE

(30) Priority: 20.01.2014 CN 201410023694
(43) Date of publication of application: 30.11.2016
(73) Proprietor: Apex Microelectronics Co., Ltd, Zhuhai, Guangdong 519075 (CN)
(72) Inventor: LIU, Weichen, Zhuhai Guangdong 519075 (CN)
(74) Representative: Gill Jennings & Every LLP
(86) International application number: PCT/CN2014/074315
(87) International publication number: WO 2015/106491

(56) References cited:
- CN-A- 102 501 608
- CN-A- 103 332 015
- CN-A- 103 332 015
- CN-A- 103 879 157
- CN-A- 103 921 574
- CN-A- 103 950 300
- US-A1- 2008 102 892
- US-A1- 2011 078 449
- US-A1- 2012 317 662
- None

## Description

This application claims priority to Chinese Patent Application No. 201410023694.0, entitled "METHOD OF TRANSMITTING PARAMETER OF STORAGE CHIP OF IMAGING CARTRIDGE, STORAGE CHIP AND IMAGING CARTRIDGE", filed with the Chinese Patent Office on January 20, 2014.

### FIELD

The application relates to the field of a print imaging technology, and particularly to a method for generating and transmitting a parameter of a storage chip of an imaging cartridge, a storage chip and an imaging cartridge.

### BACKGROUND

In recent years, a general application of the a print imaging device (such as an ink-jet printer, a laser printer, a LED printer, a duplicating machine or a multi-function printer) is installed with an imaging cartridge (such as an ink cartridge, a drum unit and a toner cartridge) having a storage chip. Information on the imaging cartridge is stored in the storage chip. In a case that the imaging cartridge is installed on the print imaging device, the print imaging device may acquire the information on the imaging cartridge from the storage chip of the imaging cartridge, and then correctly execute a print imaging operation based on the information. In addition, the print imaging operation may limit a usage of an empty imaging cartridge, by writing information into the storage chip after the print operation is executed or when a recording material in the imaging cartridge is exhausted. Two types of information are normally stored in a known storage chip. One type of information is immutable information, for example fixed information such as a brand, a serial number, a recording material (such as toner, ink) capacity and a production date which are related to the imaging cartridge. Another type of information is information for recording the usage of the imaging cartridge in a real-time manner, which is variable information and includes consumption of the recording material, a residual amount of the recording material, the number of printed pages, the number of pages to be printed, and an original date of installation. Different brands and different types of storage chips generally store different kinds or types of information.

Since most print imaging devices are not able to correctly detect the residual amount of the recording material in the imaging cartridge, it is possible that a large amount of recording materials are still remained in the imaging cartridge, when data on the residual amount of the recording material stored in the storage chip has been rewritten into an insufficient residual amount of the recording material. In this case, some compatible manufacturers have launched an imaging cartridge, in which the data stored in the storage chip may be reset, and therefore the storage chip may be reused until the recording material in the imaging cartridge is exhausted.

Obviously, in the case of the reusage of the storage chip or the imaging cartridge, an abnormal operation of the print imaging device may be happened, because of a discarded imaging cartridge beyond the service life, as well as the business benefit of an original equipment manufacturer (OEM) may be hurt. Therefore, some original equipment manufacturers take a corresponding action to limit a user to reuse the storage chip. That is, a serial number memory is provided at the print imaging device. When the user installs the imaging cartridge into the print imaging device for the first time, the serial number of the storage chip of the imaging cartridge is recorded. When other imaging cartridge with the same serial number is installed on the print imaging device, the print imaging device may determine that the storage chip of the imaging cartridge is illegal, because the serial number has been already recorded in the print imaging device. Therefore, the imaging cartridge is unable to be reused continuously.

In order to produce an imaging cartridge which can be applied to the print imaging device, some compatible manufacturers crack the storage chip of an original manufacturer to acquire some usable serial numbers. However, if the acquired serial numbers are directly stored in the storage chip, such kind of key parameters can be easily acquired by a competitor. Besides the serial number, the similar problem exists in other parameters on the storage chip. Therefore, a technical problem to be solved in the application lies in how to manage these parameters rationally.
CN-A-103332015 discloses a chip, an imaging box and a method for responding to an imaging device. A circuit board of the chip comprises an interface part communicated with the imaging device, a parameter storage part used for storing variable parameters, a data generation part used for generating response data according to the variable parameters, and a control part. The response data can be identified by the imaging device and contains inaccurate information; and the control part transmits the response data to the imaging device when the imaging device reads service data, transmits the response data and the service data from the imaging device to a comparison part when the imaging device writes in the service data, and changes the variable parameters in the parameter storage part according to a compared result.
US-A-2011/078449 discloses a system for encrypted communication with external entities configured to frustrate side channel attacks attempting to determine an encryption key. The system has a device with an encryption key stored in memory, an external entity with identity data for transmission to the device to initiate communication such that in response the device applies a one way function to the encryption key and the identity data to generate a variant key used to authenticate communications between the device and the external entity. The device is configured to limit the number of times the encryption key is allowed to be retrieved from the first memory to a pre-determined threshold.

### SUMMARY

The technical problem to be solved in the application is to provide a method for generating and transmitting a parameter of a storage chip of an imaging cartridge, a storage chip and an imaging cartridge, to effectively protect a parameter of the storage chip.

The invention provides a method for transmitting a parameter of a storage chip of an imaging cartridge in accordance with claim 1, a storage chip of an imaging cartridge in accordance with claim 8 and an imaging cartridge comprising the storage chip in accordance with claim 14 hereto.

The embodiments of the application provide a method for transmitting a parameter of a storage chip of an imaging cartridge, which includes:
receiving an instruction transmitted by a print imaging device; and
determining that the instruction is an instruction for reading a key parameter, and transmitting the key parameter to the print imaging device, where the key parameter is generated by the storage chip,
wherein the key parameter is fixed information relating to the imaging cartridge.

Preferably, the instruction may further include an instruction for reading a non-key parameter, and the non-key parameter is a parameter prestored in the storage chip; and the method further includes:
determining that the instruction is the instruction for reading the non-key parameter; and transmitting the prestored non-key parameter to the print imaging device.

Preferably, a process of generating the key parameter by the storage chip may include:
performing a calculation in accordance with a preset rule based on prestored reference data and a calculation instruction transmitted by the print imaging device, to generate a calculation result; and generating the key parameter from the calculation result, where the instruction further includes the calculation instruction; or
performing a calculation in accordance with a preset rule based on a calculation instruction transmitted by the print imaging device, to generate a calculation result; and generating the key parameter from the calculation result, where the instruction further includes the calculation instruction; or
performing a calculation in accordance with a preset rule based on prestored reference data, to generate a calculation result; and generating the key parameter from the calculation result.

Preferably, before performing the calculation, the method may further include:
caching the calculation instruction.

Preferably, before transmitting the key parameter to the print imaging device, the method may further include:
determining whether the key parameter is legal, and transmitting the key parameter to the print imaging device in a case that the key parameter is legal.

Preferably, the generating the key parameter from the calculation result may include:
integrating a prestored incomplete parameter with the calculation result, to obtain the key parameter.

Preferably, the transmitting the key parameter to the print imaging device may include:
transmitting, in bytes, the key parameter to the print imaging device, where the calculation is performed to obtain the calculation result before the instruction for reading the key parameter is received; or
transmitting, in bits, the key parameter to the print imaging device, where the calculation is performed to obtain the calculation result when the instruction for reading the key parameter is received.

Preferably, the performing the calculation in accordance with the preset rule to generate the calculation result may include:
performing the calculation in accordance with multiple preset rules, to generate multiple calculation results corresponding to the multiple preset rules; and
transmitting one of the multiple calculation results to the print imaging device once one instruction for reading the key parameter is transmitted by the print imaging device, until the print imaging device stops to transmit the instruction for reading the key parameter.

Preferably, the preset rule may include at least one of a logical operation, a mathematical operation, an operation for replacing data, an operation for shifting data and an operation for reordering data.

The embodiments of the application may further provide a storage chip of an imaging cartridge, including an interface unit, a determining unit, a parameter generating unit and a transmitting unit, where
the interface unit is adapted to receive an instruction transmitted by a print imaging device;
the determining unit is adapted to determine a type of the instruction;
the transmitting unit is adapted to transmit a key parameter to the print imaging device through the interface unit, in a case that the determining unit determines that the instruction is an instruction for reading the key parameter; and
the parameter generating unit is adapted to generate the key parameter,
wherein the key parameter is fixed information relating to the imaging cartridge.

Preferably, the storage chip of the imaging cartridge may further include a storage unit; where
the storage unit is adapted to prestore a non-key parameter;
the determining unit is adapted to determine that the instruction is an instruction for reading the non-key parameter; and
the transmitting unit is adapted to transmit the non-key parameter to the print imaging device via the interface unit.

Preferably, the parameter generating unit may include a calculating module adapted to perform a calculation in accordance with a preset rule based on a calculation instruction transmitted by the print imaging device and prestored reference data, to generate a calculation result, and generate the key parameter from the calculation result; where a type of the instruction further includes the calculation instruction; or
the parameter generating unit may include a calculating module adapted to perform a calculation in accordance with a preset rule based on a calculation instruction transmitted by the print imaging device, to generate a calculation result; and generate the key parameter from the calculation result, where a type of the instruction further includes the calculation instruction; or
the parameter generating unit may include a calculating module adapted to perform a calculation in accordance with a preset rule based on prestored reference data, to generate a calculation result; and generate the key parameter from the calculation result; and
the storage unit is further adapted to cache the calculation instruction.

Preferably, the storage chip of the imaging cartridge may further include a check unit adapted to check the key parameter before the transmitting unit transmits the key parameter to the print imaging device, where the transmitting unit transmits the key parameter to the print imaging device in a case that the key parameter is checked to be legal.

Preferably, the calculating module may include an integrating sub-module adapted to integrate a prestored incomplete parameter with the calculation result, to obtain the key parameter; and
the storage unit is further adapted to prestore the incomplete parameter.

Preferably, the transmitting unit being adapted to transmit the key parameter to the printing imaging device may be further adapted to:
transmit, in bytes, the key parameter to the print imaging device, where the parameter generating unit performs the calculation before the instruction for reading the key parameter is received by the interface unit; or
transmit, in bits, the key parameter to the print imaging device, where the parameter generating unit performs the calculation when the instruction for reading the key parameter is received by the interface unit.

Preferably, the parameter generating unit adapted to perform a calculation in accordance with the preset rule to generate the calculation result may be further adapted to:
perform the calculation in accordance with multiple preset rules, to generate multiple calculation results corresponding to the multiple preset rules, where
the transmitting unit transmits one of the multiple calculation results to the print imaging device once one instruction for reading the key parameter is transmitted by the print imaging device, until the print imaging device stops to transmit the instruction for reading the key parameter.

Preferably, the preset rule may include at least one of a logical operation, a mathematical operation, an operation for replacing data, an operation for shifting data or an operation for reordering data.

The embodiments of the application may further provide an imaging cartridge, including the storage chip.

The application has the following advantages compared with the conventional technology.

In the embodiments of the application, the parameter to be read by the print imaging device is generated by the storage chip. When the print imaging device transmits a reading instruction, the parameter generated by the storage chip is transmitted to the print imaging device, instead of being directly read by the print imaging device at any moment, which may prevent a certain important parameter in the storage chip from being obtained maliciously. Furthermore, a compatible manufacturer or an original equipment manufacturer of the storage chip is not necessary to store a complete and specific parameter in the storage chip, which may prevent a competitor from directly reading the storage chip and obtaining the certain important parameters. In this way, the certain important parameters in the storage chip can be protected.

### BRIEF DESCRIPTION OF THE DRAWINGS

In order to more clearly illustrate the technical solution in the embodiments of the application or in the conventional technology, in the following, the drawings required in the description of the embodiments or the conventional technology will be introduced simply, obviously, the drawings in the following description are just some embodiments of the application, for those skilled in the art, other drawings may also obtained based on these drawings without any creative work.
Figure 1 is a flow diagram of a first embodiment of a method for transmitting a parameter of a storage chip of an imaging cartridge according to the application;
Figure 2 is a flow diagram of a second embodiment of a method for transmitting a parameter of a storage chip of an imaging cartridge according to the application;
Figure 3 is a flow diagram of a third embodiment of a method for transmitting a parameter of a storage chip of an imaging cartridge according to the application;
Figure 4 is a schematic diagram of a first embodiment of a storage chip of an imaging cartridge according to the application;
Figure 5 is a schematic diagram of a second embodiment of a storage chip of an imaging cartridge according to the application;
Figure 6 is a schematic diagram of a third embodiment of a storage chip of an imaging cartridge according to the application; and
Figure 7 is a schematic diagram of a fourth embodiment of a storage chip for an imaging cartridge according to the application.

### DETAILED DESCRIPTION OF EMBODIMENTS

The technical solution in the embodiments of the application will be described clearly and completely below in conjunction with the drawings in the embodiments of the application. Obviously, the described embodiments are just a part of embodiments of the application, and are not all embodiments. Based on the embodiments of the application, all other embodiments obtained by those skilled in the art without paying any creative work will fall within the scope of protection of the application.

In order to make objects, features and advantages of the application described above more clearly and easier to be understood, the embodiments of the application will be illustrated in detail below in conjunction with drawings.

### First embodiment of a method

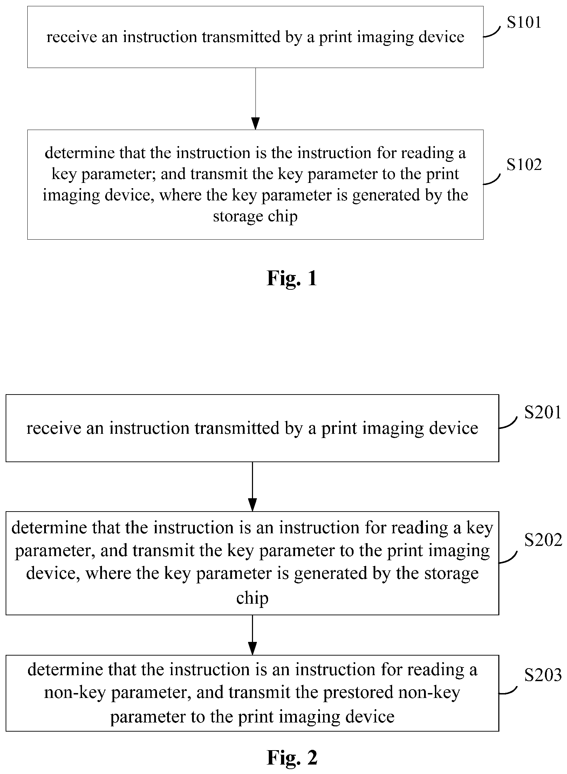

Referring to Figure 1, a flow diagram of a first embodiment of a method for transmitting a parameter of a storage chip of an imaging cartridge is shown according to the application.

The method for transmitting a parameter of the storage chip of the imaging cartridge according to the embodiment includes step S101 to S102.

S101 includes receiving an instruction transmitted by a print imaging device.

It should be noted that the instruction transmitted from the print imaging device to the storage chip of the imaging cartridge may include a reading instruction and other types of instructions, where the reading instruction refers to an instruction for reading a certain parameter from the storage chip and transmitting the read parameter to the print imaging device.

Practically, it may be understood that some types of instructions is an instruction, other than the instruction for reading the parameter from the storage chip and transmitting the read parameter to the print imaging device.

S102 includes: determining that the instruction is the instruction for reading a key parameter; and transmitting the key parameter to the print imaging device, where the key parameter is generated by the storage chip.

It should be noted that the parameter to be read by the print imaging device includes the key parameter and a non-key parameter. As the name implies, the key parameter is an important parameter. With the method according to the application, the key parameter in the storage chip can be prevented from being acquired by an illegal manufacturer or a malicious acquirer.

For example, the key parameter may include a serial number of the storage chip. In addition, the key parameter may also include other parameters, for example an ink capacity. Inherent information on the storage chip may be defined as the key parameter widely, and other variable information may be defined as the non-key parameter. For example, the variable information such as an ink remaining amount, and the number of printed pages, a consumption amount of a toner and an initial first installation date may all be defined as the non-key parameter, which will not be enumerated here any more.

It may be understood that not all instructions transmitted by the print imaging device require acquiring the parameter of the storage chip, and some instructions does not require acquiring the parameter. As long as receiving an instruction for reading the key parameter from the print imaging device, the storage chip may transmit the key parameter to the print imaging device. Thus, in the method, the key parameter is transmitted only when a particular instruction is received, which cannot be read at any moment in response to other instructions.

It should be illustrated that, in the embodiment, the key parameter to be read by the print imaging device is generated by the storage chip; only when the print imaging device transmits the instruction for reading the key parameter, the storage chip may transmits the key parameter generated by itself to the print imaging device. Thus, the key parameter cannot be directly read by other instructions at any moment. In addition, the key parameter is generated by the storage chip, instead of being prestored in the storage chip, which thus cannot be read by cracking, a backdoor or the like in a non-printing environment. In this way, the key parameter in the storage chip may be prevented from being obtained maliciously. Furthermore, a compatible manufacturer or an original equipment manufacturer of the storage chip is not necessary to store a complete key parameter in the storage chip, which can prevent a competitor from directly reading the storage chip and obtaining the key parameter. Therefore, the key parameter in the storage chip may be protected.

### Second embodiment of a method

Referring to Figure 2, a flow diagram of a second embodiment of a method for transmitting a parameter of a storage chip of an imaging cartridge is shown according to the application.

S201 includes: receiving an instruction transmitted by a print imaging device.

S202 includes: determining that the instruction is an instruction for reading a key parameter, and transmitting the key parameter to the print imaging device, where the key parameter is generated by the storage chip.

S201 and S202 are similar to S101 to S102 in the first embodiment of the method, which will be omitted herein.

S203 includes: determining that the instruction is an instruction for reading a non-key parameter, and transmitting the prestored non-key parameter to the print imaging device.

The non-key parameter is a parameter prestored in the storage chip.

It should be noted that the non-key parameter may also be stored in the storage chip. The non-key parameter may be read directly and is not generated by the storage chip, which may be prestored in the storage chip. The prestored non-key parameter is directly transmitted to the print imaging device, in the case that the instruction transmitted by the print imaging device is determined as the instruction for reading the non-key parameter.

### Third embodiment of a method

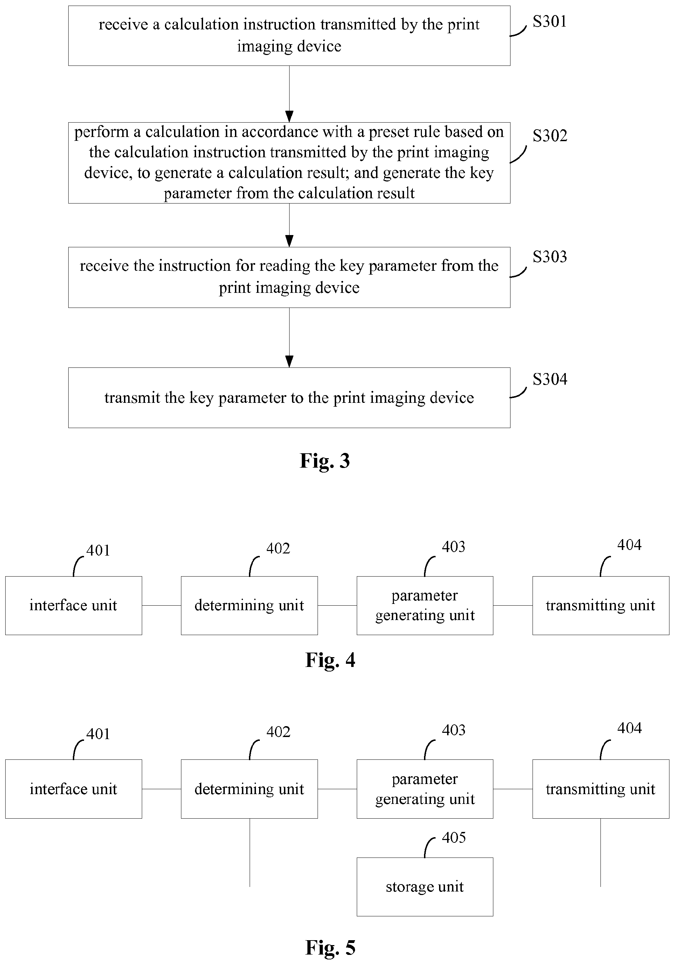

Referring to Figure 3, a flow diagram of a third embodiment of a method for transmitting a parameter of a storage chip of an imaging cartridge is shown according to the application.

It should be noted that an instruction for reading a key parameter and an instruction for reading a non-key parameter are reading instructions. Besides the reading instructions, the instruction may further include a calculation instruction. The calculation instruction in the embodiment is one of calculation conditions under which the storage chip generates the key parameter. In the application, the calculation instruction is not an instruction defined by the print imaging device and adapted to instruct the storage chip to perform a calculation, but is a general term of all instructions defined by the storage chip and adapted to generate a calculation result. The calculation instruction may include the instruction for reading the key parameter and the instruction for reading the non-key parameter described above. Specifically, the storage chip may generate the key parameter by one of the following three ways: performing a calculation in accordance with a preset rule based on the calculation instruction, to obtain a calculation result; performing a calculation in accordance with a preset rule based on the calculation instruction and reference data prestored in the storage chip, to obtain a calculation result; or performing a calculation in accordance with a preset rule based on reference data prestored in the storage chip, to obtain a calculation result. Then, the key parameter is generated based on the calculation result.

A method for generating the key parameter based on the calculation instruction is mainly introduced in the embodiment.

S301 includes: receiving a calculation instruction transmitted by the print imaging device.

S302 includes: performing a calculation in accordance with a preset rule based on the calculation instruction transmitted by the print imaging device, to generate a calculation result; and generating the key parameter from the calculation result.

The preset rule includes at least one of a logical operation, a mathematical operation, an operation for replacing data, an operation for shifting data and an operation for reordering data. It should be noted that the preset rule may include one calculation rule, or two or more calculation rules, which depends on a specific setting. The preset rule may be selected and combined freely as requested, which will not be limited herein.

S303 includes: receiving the instruction for reading the key parameter from the print imaging device.

It should be illustrated that no sequence is limited between S302 and S303. That is, in the case that the instruction for reading the key parameter is not received, the storage chip may generate the key parameter; and once the instruction for reading the key parameter is received, the calculated key parameter is transmitted to the print imaging device. Alternatively, the calculation may be performed in accordance with the preset rule after the instruction for reading the key parameter reading is received, and the generated key parameter is then transmitted to the print imaging device. The calculation instruction may be cached before the instruction for reading the key parameter is received, and the calculation is performed based on the calculation instruction after the instruction for reading the key parameter is received.

S304 includes: transmitting the key parameter to the print imaging device.

The storage chip may performed the calculation in response to all received calculation instructions; and covers an address of the existing calculation result with a subsequent calculation result in an overwriting way, or only registers a calculation result of a certain calculation instruction; or performs the calculation only in response to a certain calculation instruction and then stores the calculation result into the storage space, so as to save the storage space for the calculation result.

Since the calculation result generally has a short data length, a storage space of the storage chip in the embodiment may be embodied by a register or a volatile storage unit (for example, a static random access memory (SRAM)). Obviously, in the case of no separate power supply unit for the storage chip, when the print imaging device stops supplying power to the storage chip, the calculation results stored in the volatile storage unit and the register will be lost, due to characteristics of the volatile storage unit and characteristics of the register. In this way, the key data is protected from being read by cracking in some degree, without supplying power.

An operation principle of the method according to the application is illustrated in detail below in conjunction with a specific example.

Example 1: it is assumed that the print imaging device successively transmits three instructions to the storage chip, where the three instructions respectively are "OxA3", "0x0D" and "0xC8" (which are hexadecimal numbers, and converted into binary numbers 10100011, 00001101 and 11001000, respectively). The third instruction "0xC8" is an instruction for reading a key parameter, which is adapted to read a serial number of the storage chip. The serial number of the storage chip is 0x32 (00110010 in a binary format). In the non-volatile storage unit of the storage chip, the preset rule for the store is an algorithm in which a ones-complement code of the received instruction is calculated, and 5 is then subtracted from the ones-complement code.

When the storage chip receives the first instruction 0xA3, in accordance with the preset rule of the store of the non-volatile storage unit, a ones-complement code of 0xA3 is calculated first to obtain 0x5C (01011100); and 5 is then subtracted from the obtained ones-complement code 0x5C, to generate a calculation result 0x57. Then, the calculation result 0x57 is stored in the storage space. It is determined that the first instruction 0xA3 is irrelevant to the serial number (key parameter), and therefore it is determined that the calculation result 0x57 is not transmitted to the print imaging device.

Similarly, when the storage chip receives the second instruction 0x0D, in accordance with the preset rule, a ones-complement code of 0x0D is firstly calculated to obtain 0xF2 (11110010), and 5 is then subtracted from the obtained ones-complement code 0xF2, to generate a calculation result 0xED. Then, the calculation result 0xED is stored in the storage space. It is determined that the second instruction 0x0D is irrelevant to the serial number (key parameter), and therefore it is determined that the calculation result 0xED is not transmitted to the print imaging device.

The third instruction 0xC8 is the instruction for reading the key parameter, which is adapted to read the serial number of the storage chip. In the method, in accordance with the preset rule, a ones-complement code of 0xC8 is firstly calculated to obtain 0x37 (00110111), and 5 is then subtracted from the obtained ones-complement code 0x37, to generate a calculation result 0x32. Then, the calculation result 0x32 is stored in the storage space. It is determined that the third instruction 0xC8 directly relates to the serial number (key parameter), and therefore it is determined that the calculation result 0x32 is transmitted to the print imaging device.

Obviously, since the calculation result 0x32 is the serial number of the storage chip, the print imaging device may acquire a correct serial number after the calculation result (key parameter) is transmitted to the print imaging device, and therefore it is determined that the storage chip is legal.

The calculation process described above is shown as data in Table 1.

**Table 1 calculation process and calculation result for instruction**

| Instruction sequence | Instruction | Ones-complement code of instruction | Calculation result |
|---|---|---|---|
| 1 | "0xA3"(10100011) | 0x5C (01011100) | 0x57 |
| 2 | "0x0D"(00001101) | 0xF2 (11110010) | 0xED |
| 3 | "0xC8"(11001000) | 0x37 (00110111) | 0x32 |

Besides the logical operation and the mathematical operation described above, the preset rule may also be operation for replacing or shifting the data in the instruction. The preset rule may be set based on the characteristics of the calculation instruction and the key parameter to be generated, which is not limited herein.

In the application, the key parameter, calculated by the storage chip in accordance with the preset rule, may also be other parameters such as the ink capacity, besides the serial number described above.

In different storage chips suitable for the same print imaging device, since certain key parameters such as the serial number are different and the instructions from the print imaging device are the same, different preset rules corresponding to different storage chips may be stored in the non-volatile storage unit. In addition, since certain parameters such as the ink capacity are the same, the same preset rule may be stored in different storage chips.

In the example described above, the calculation results of the first instruction and the second instruction are not required for the instruction for reading the key parameter (directly related to the calculation result). Therefore, it is possible that the calculation is not performed on the two instructions, but only performed on the third instruction. That is, the storage chip may selectively perform the calculation on the received instructions.

Therefore, in the storage chip according to the application, because the key parameter is generated by the storage chip in accordance with the preset rule and the calculation instruction, the compatible manufacturer or the original equipment manufacturer is not necessary to store a complete and specific parameter in the storage chip, which may prevent a competitor from directly reading the storage chip and obtaining these specific parameters. In this way, the data is protected.

In the example described above, a process of generating the key parameter in one preset rule is illustrated. However, in order to improve confidentiality of the key parameter, multiple (two or more) different preset rules may also be stored in the storage unit. Key parameters suitable for different print imaging devices may be generated in accordance with the multiple different preset rules, respectively.

The process of performing the calculation in accordance with the preset rule and generating the calculation result includes:
performing the calculation in accordance with multiple preset rules, to generate multiple calculation results corresponding to the multiple preset rules; and
transmitting one of the multiple calculation results to the print imaging device, once one instruction for reading the key parameter is transmitted by the print imaging device, that is, the one instruction for reading the key parameter is received by the storage chip, until the print imaging device stops to transmit the instruction for reading the key parameter. Every time one instruction for reading the key parameter is received, the storage chip may transmit one of the multiple calculation results; and the multiple calculation results are transmitted in order. Alternatively, every time one instruction for reading the key parameter is received, the storage chip may transmit one of the multiple calculation results randomly.

The method according to the application is illustrated below by taking three different preset rules as an example.

Example 2: it is assumed that the print imaging device transmits two instructions to the storage chip successively, and the two instructions respectively are "0xA3" and "0xC8" (which are hexadecimal numbers, and converted into binary numbers 10100011 and 11001000, respectively). The second instruction 0xC8 is an instruction for reading a key parameter, which is adapted to read the serial number of the storage chip. The serial number (key parameter) of the storage chip is 0x32 (represented as 00110010 in a binary format). In the non-volatile storage unit of the storage chip, a first preset rule for the store includes: extracting numbers of the first instruction "0xA3" in order of the 6^{th} digit, the 2^{nd} digit, the 1^{st} digit, the 4^{th} digit, the 8^{th} digit, the 3^{rd} digit, the 5^{th} digit, and the 7^{th} digit, to compose a first calculation result. The second preset rule includes: extracting numbers of the first instruction "0xA3" in order of the 3^{rd} digit, the 8^{th} digit, the 5^{th} digit, the 4^{th} digit, the 2^{nd} digit, the 6^{th} digit, the 7^{th} digit, and the 1^{st} digit, to compose a second calculation result. The third preset rule includes: extracting numbers of the first instruction "0xA3" in order of the 2^{nd} digit, the 4^{th} digit, the 1^{st} digit, the 8^{th} digit, the 5^{th} digit, the 6^{th} digit, the 3^{rd} digit, and the 5^{th} digit, to compose a third calculation result.

When the storage chip receives the first instruction 0xA3, in accordance with the first preset rule, the numbers of the first instruction (10100011) is extracted in order of the 6^{th} digit, the 2^{nd} digit, the 1^{st} digit, the 4^{th} digit, the 8^{th} digit, the 3^{rd} digit, the 5^{th} digit, and the 7^{th} digit, to compose the first calculation result 00101101, i.e. 0x2D. Similarly, the second calculation result 0xC3 and the third calculation result 0x32 are generated in accordance with the second preset rule and the third preset rule, respectively. Then, the calculation results 0x2D, 0xC3 and 0x32 are stored. Subsequently, when the storage chip receives the second instruction 0xC8, the second instruction 0xC8 is determined as the instruction for reading the key parameter, which is adapted to read the serial number of the storage chip. Therefore, the first calculation result 0x2D is transmitted to the print imaging device.

Obviously, since the calculation result 0x2D is not the serial number of the storage chip, the print imaging device determines that the read serial number is incorrect after receiving the calculation result 0x2D. Then, the instruction 0xC8 for reading the key parameter is transmitted to the storage chip again.

When the storage chip receives a third instruction 0xC8, the third instruction 0xC8 is determined as the instruction for reading the key parameter, which is adapted to read the serial number of the storage chip. Thus, the second calculation result 0xC3 is transmitted to the print imaging device.

Obviously, since the calculation result 0xC3 is not the serial number of the storage chip, the print imaging device determines that the read serial number is incorrect after receiving the calculation result 0xC3. Then, the instruction 0xC8 for reading the key parameter is transmitted to the storage chip again.

When the storage chip receives a fourth instruction 0xC8, the fourth instruction 0xC8 is determined as the instruction for reading the key parameter, which is adapted to read the serial number of the storage chip. Thus, the third calculation result 0x32 is transmitted to the print imaging device via an interface unit.

Obviously, since the third calculation result 0x32 is the serial number of the storage chip, the print imaging device may obtain the correct serial number after this calculation result is transmitted to the print imaging device, and thus it is determined that the storage chip is legal. In this way, the instruction for reading the key parameter is no longer transmitted to the storage chip. The calculation process described above is shown as data in Table 2.

**Table 2. Process of extracting numbers from instruction and calculation result**

| Program | Instruction | Order of extracting digits | Calculation result |
|---|---|---|---|
| 1 | "0xA3" (10100011) | 6, 2, 1, 4, 8, 3, 5, 7 | 0x2D |
| 2 | "0xA3" (10100011) | 3, 8, 5, 4, 2, 6, 7, 1 | 0xC3 |
| 3 | "0xA3" (10100011) | 2, 4, 1, 8, 5, 6, 3, 5 | 0x32 |

It is assumed that the serial numbers, generated based on the three above preset rules, are suitable for print imaging devices in model A, model B and model C, respectively. It is obvious that the serial number 0x32 described above is suitable for the print imaging device in the model C. When the storage chip described above is installed at the print imaging device in the model A, the print imaging device just needs to transmit the instruction for reading the key parameter one time, the correct serial number (key parameter) can be read. A control unit of the storage chip may determine whether an instruction received next is the instruction for reading the key parameter, after the calculation result is transmitted to the print imaging device. The control unit may select another calculation result as data to be transmitted, in the case that the instruction received next is the instruction for reading the key parameter. In the case that the instruction received next is not the instruction for reading the key parameter, it is represented that the print imaging device has received the correct key parameter, and the calculation result just transmitted is served as a fixed calculation result of the storage chip. In the embodiment, the correct serial number of the storage chip is related to the print imaging device installed with the storage chip, and the storage chip does not transmit a constant number. Therefore, the confidentiality of the key parameter, such as the serial number, is improved.

In addition, the times of different printing imaging devices for permitting to read the incorrect key parameter are different. For example, in the above example, the print imaging device is permitted to read the incorrect key parameter two times. In this case, if the storage chip is installed in a print imaging device which is permitted to read the incorrect key parameter only one time, the storage chip cannot operate normally. In order to improve the versatility of the storage chip, the multiple preset rules may be all provided into these chips uniformly. When the generated key parameter is transmitted to the print imaging device, an order for transmitting the calculation results or the key parameters is recorded in the storage chip. When the storage chip determines that a next instruction transmitted by the print imaging device is not the instruction for reading the key parameter, it is indicated that the key parameter just transmitted is acceptable for the print imaging device. Then, the order for transmitting the calculation results or the key parameters, which is currently recorded in the storage chip, is deleted. On the contrast, if the storage chip determines that the next instruction transmitted by the print imaging device is still the instruction for reading the key parameter, it is indicated that the key parameter just transmitted is unacceptable for the print imaging device. Then, the order recorded in the storage chip is reserved. In this case, the print imaging device may prompt a user that the storage chip is abnormal, and the user is required to check the print imaging device. When the print imaging device is turned off or the imaging cartridge is to be removed from the print imaging device, the print imaging device will stop supplying power to the storage chip. When the print imaging device is turned on or the imaging cartridge is installed in the print imaging device, the print imaging device will supply power to the storage chip, and the storage chip may be powered up and initialized, for example, a counter and an address pointer may be reset. Therefore, when the user reinstalls the image cartridge to supply power to the storage chip by the print imaging device again, the image cartridge may receive the instruction for reading the key parameter again. In this case, based on the order stored in the storage chip, a next calculation result or key parameter of the unacceptable key parameter in the order may be transmitted to the print imaging device. In this case, no matter which print imaging device installs with the storage chip, multiple calculation results generated by the storage chip in accordance with multiple preset rules will be transmitted to the print imaging device over and over again. As described above, if the storage chip is installed in the print imaging device permitted to read the incorrect key parameter only one time, the storage chip may transmit a next calculation result or key parameter of the unacceptable key parameter in the order, after the print imaging device stops supplying power to the storage chip and then power on again.

Furthermore, when the user installs the imaging cartridge at the print imaging device, if the print imaging device obtains the incorrect key parameter of the storage chip, such as the incorrect serial number, the print imaging device may recognize the imaging cartridge as an illegal imaging cartridge. Therefore, the storage chip according to the application may further determine whether the calculation result is legal before transmitting the calculation result to the print imaging device. That is, the storage chip determines whether the key parameter is legal; and only in the case of the legal calculation result, the calculation result is transmitted to the print imaging device. Therefore, a certain parameter is protected from being read by the print imaging device in an inappropriate case.

Therefore, in order to protect the parameter from being read by the print imaging device in an inappropriate case, before the key parameter is transmitted to the print imaging device, the method according to the application may further include:
determining whether the key parameter is legal, and transmitting the key parameter to the print imaging device in a case that the key parameter is legal.

It should be noted that the process of determining whether the key parameter is legal includes: storing a check value in the storage chip; and determining whether a check value of the key parameter is the stored check value. The check value of the key parameter may be obtained by performing a parity check, a summation check, or MD5 check on the key parameter.

In addition, in order to improve a confidentiality of the key parameter, an incomplete parameter may be prestored in the storage chip. The calculation result is a part of the key parameter, and the other part of the key parameter is the incomplete parameter.

Particularly, the process of generating the key parameter based on the calculation result includes:
integrating the prestored incomplete parameter with the calculation result, to obtain the key parameter.

It should be illustrated that the process of transmitting the obtained key parameter to the print imaging device includes:
transmitting, in bytes, the key parameter to the print imaging device, where the calculation is performed to obtain the calculation result before the instruction for reading the key parameter is received; or
transmitting, in bits, the key parameter to the print imaging device, where the calculation is performed to obtain the calculation result when the instruction for reading the key parameter is received.

In this way, the key parameter may be calculated and obtained before the instruction for reading the key parameter is received. Then, the key parameter is transmitted to the print imaging device in bytes, when the instruction for reading the key parameter is received. Thus, a workload of the storage chip is reduced, and the storage chip may be embodied by a simple circuit. In other ways, the key parameter may be calculated when the instruction for reading the key parameter is received. In this case, the storage chip is required to have strong parallel processing capacity or asynchronous processing capacity. The key parameter may be generated bit by bit, and then transmitted to the print imaging device bit by bit. Thus, the complete key parameter is not stored in the storage chip, and therefore the confidentiality of the key parameter is improved greatly.

A specific method for transmitting the parameter from the storage chip to the print imaging device is introduced below.

Before the instruction for reading the key parameter is received, the calculation instruction is processed in accordance with the preset rule, to obtain a calculation result. The generated key parameter is directly transmitted via the bus, once the instruction for reading the key instruction is received.

The embodiment further provides another method for transmitting a parameter of a storage chip of an imaging cartridge, in which a bitwise operation is performed in accordance with a preset rule in a real-time manner, to generate each bit of a calculation result and transmit the currently generated bit of the calculation result via a bus, when an instruction for reading a key parameter is received, rather than generating the key parameter before an instruction for reading key parameter is received.

The method for transmitting the parameter of the storage chip of the imaging cartridge according to the embodiment includes the following steps, and the other part of the method is similar to the method embodiments described above. The method includes:
receiving an instruction transmitted by the print imaging device;
determining a type of the received instruction, where the type of the instruction includes a calculation instruction, an instruction for reading a non-key parameter and an instruction for reading a key parameter;
extracting data of the calculation instruction from the calculation instruction in accordance with a preset rule in a case that the type of the instruction is determined as the calculation instruction; and
transmitting, bit by bit, the data extracted from the calculation instruction via a bus, in a case that the received instruction is the instruction for reading the key parameter. Since multiple bits of data extracted from the calculation instruction may compose the key parameter, the print imaging device can receive the key parameter via the bus.

Preferably, the data is extracted from the calculation instruction bit by bit.

Based on the method for transmitting the parameter of the storage chip of the imaging cartridge according the embodiments, an embodiment of the application further provide a storage chip of an imaging cartridge. In the following, components of the storage chip are introduced in detail in conjunction with specific embodiments.

### First embodiment of storage chip

Referring to Figure 4, a schematic diagram of a first embodiment of a storage chip of an imaging cartridge is shown according to the application.

The storage chip of the imaging cartridge according to the embodiment includes an interface unit 401, a determining unit 402, a parameter generating unit 403 and a transmitting unit 404.

The interface unit 401 is adapted to receive an instruction transmitted by a print imaging device.

The interface unit 401 is adapted to electrically connect to the print imaging device, and receive the instruction transmitted by the print imaging device. The interface unit 401 may be connected to the print imaging device in a wired manner or a wireless manner.

The determining unit 402 is adapted to determine a type of the instruction.

It should be illustrated that, the instruction transmitted from the print imaging device to the storage chip of the imaging cartridge may include a reading instruction or other type of instruction, the reading instruction refers to an instruction for reading a certain parameter from the storage chip to the print imaging device.

Practically, it may be understood that some type of instructions is such an instruction, other than the instruction for reading the parameter from the storage chip to the print imaging device.

The parameter generating unit 403 is adapted to generate a key parameter.

It should be illustrated that the parameter to be read by the print imaging device includes the key parameter and a non-key parameter. As the name implies, the key parameter is an important parameter. With the method according to the application, the key parameter in the storage chip may be protected from being acquired by an illegal manufacturer or a malicious acquirer.

For example, the key parameter may include a serial number of the storage chip. In addition, the key parameter may be other parameters, such as an ink capacity, which will not be exemplified here any more.

It may be understood that not all instructions transmitted by the print imaging device require acquiring the parameter of the storage chip, and some instructions do not require acquiring the parameter. As long as receiving the instruction for reading the key parameter from the print imaging device, the storage chip may transmit the key parameter to the print imaging device. Thus, in the method, the key parameter is transmitted only when a particular instruction is received, which cannot be read at any moment in response to other instructions.

The transmitting unit 404 is adapted to transmit the key parameter to the print imaging device via the interface unit in a case that the determining unit determines that the instruction is the instruction for reading the key parameter.

It should be illustrated that, in the embodiment, the key parameter to be read by the print imaging device is generated by the storage chip; only when the print imaging device transmits the instruction for reading the key parameter, the storage chip may transmits the key parameter generated by itself to the print imaging device. Thus, the key parameter cannot be directly read by the other instructions at any moment. In addition, the key parameter is generated by the storage chip, instead of being prestored in the storage chip, which thus cannot be read by cracking, backdoor or the like in a non-printing environment. In this way, the key parameter in the storage chip may be prevented from being obtained maliciously. Furthermore, a compatible manufacturer or an original equipment manufacturer of the storage chip is not necessary to store a complete key parameter in the storage chip, which can prevent a competitor from directly reading the storage chip and obtaining the key parameter. Therefore, the key parameter in the storage chip may be protected.

The parameter generating unit generally has a function for temporarily registering data. Therefore, the generated key parameter may be temporarily registered into the parameter generating unit. In the case that the parameter generating unit does not have the function for temporarily storing the data, a module for registering the key parameter may be provided at the storage chip.

Therefore, the storage chip may further include a calculation result register unit (which is optional and not necessary), which is connected to the parameter generating unit 403 and adapted to register the generated calculation result. In this case, the key parameter may be registered in the calculation result register unit, after being generated by the parameter generating unit. The key parameter is acquired from the calculation result register unit when the key parameter is to be transmitted to the print imaging device.

The parameter generating unit 403 may perform the calculation on all received instruction; and then covers an address of the existing calculation result with a subsequent generated key parameter in an overwriting way, or only registers a key parameter generated in response to a certain instruction; or only performs the calculation on a particular instruction by the parameter generating unit and then stores the calculation result into the calculation result register unit, so as to save the storage space of the calculation result register unit.

Since the key parameter generally has a short data length, the calculation result register unit of the storage chip in the application may be realized by a register, or a volatile storage unit (such as a static random access memory (SRAM)). Obviously, in the case of no separate power supply for the storage chip, when the print imaging device stops supplying power to the storage chip, the calculation results stored in the volatile storage unit and the register will be lost, due to characteristics of the volatile storage unit and characteristics of the register. In this way, the key data can be protected from being read by cracking in some degree, without supplying power.

### Second embodiment of storage chip

Referring to Figure 5, a schematic diagram of a second embodiment of a storage chip of an imaging cartridge is shown according to the application.

The storage chip according to the embodiment further includes a storage unit 405.

The storage unit 405 is adapted to prestore a non-key parameter.

It should be illustrated that the storage unit 405 may be a non-volatile memory, a SRAM or a register.

The determining unit 402 is further adapted to determine that the instruction is an instruction for reading the non-key parameter. In this case, the transmitting unit 404 is adapted to transmit the non-key parameter to the print imaging device via the interface unit 401.

The non-key parameter is a parameter prestored in the storage unit.

It should be illustrated that the storage chip may store the non-key parameter which may be read directly. That is, the non-key parameter is not necessary to be generated by the storage chip, which may be prestored in the storage chip. The prestored non-key parameter is directly transmitted to the print imaging device, in the case that the instruction transmitted by the print imaging device is determined as the instruction for reading the non-key parameter.

The non-volatile memory may also store other variable information or immutable information in the conventional technology as requested (with reference to the background). The non-volatile memory may be a common non-volatile memory, such as an erasable programmable read-only memory (EPROM), an electrically erasable programmable read-only memory (EEPROM), a FLASH, a ferroelectric storage, and a phase change memory. Alternatively, the non-volatile storage may also be embodied by combining the volatile memory with a power supply, such as SRAM + a battery/a capacitor, or DRAM + a refresh circuit and a battery/a capacitor.

### Third embodiment of storage chip

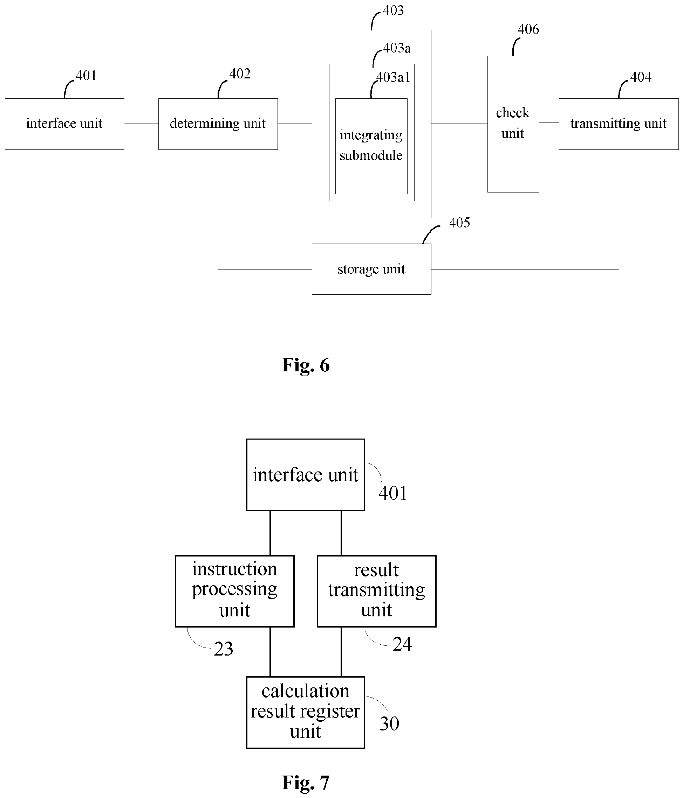

Referring to Figure 6, a schematic diagram of a third embodiment of a storage chip of an imaging cartridge is shown according to the application.

It should be illustrated that both of the instruction for reading the key parameter and the instruction for reading the non-key parameter are a reading instruction. Besides the reading instruction, the instruction may further include a calculation instruction, and the calculation instruction in the embodiment is one of calculation conditions under which the storage chip generates the key parameter. Specifically, the storage chip may perform a calculation in accordance with a preset rule based on only the calculation instruction, to obtain a calculation result; may perform a calculation in accordance with a preset rule based on the calculation instruction and reference data prestored in the storage chip, to obtain a calculation result; or may perform a calculation in accordance with a preset rule based on only the reference data prestored in the storage chip, to obtain a calculation result. Then, the storage chip may generate the key parameter based on the calculation result.

The process of generating the key parameter based on the calculation instruction is mainly introduced in the embodiment.

In the storage chip of the imaging cartridge according to the embodiment, the type of instructions further includes the calculation instruction.

The parameter generating unit 403 includes a calculating module 403a adapted to perform a calculation in accordance with a preset rule according to the calculation instruction transmitted by the print imaging device and/or the prestored reference data, to generate a calculation result; and generate the key parameter based on the calculation result.

The preset rule includes at least one of a logical operation, a mathematical operation, an operation for replacing data, an operation for shifting data or an operation for reordering data. It should be noted that the preset rule may include one or more calculation rules, which depends on a specific setting. The preset rule may be selected and combined freely as requested, which will not be limited herein.

It should be noted that there are various preset rules, which are not exemplified here any more and can refer to the example in the second embodiment of the method.

The storage unit 405 is further adapted to register the calculation instruction.

The storage chip can generate the key parameter, in the case that the interface unit 401 does not receive the instruction for reading the key parameter. Then, the storage chip may transmit the calculated key parameter to the print imaging device, when the instruction for reading the key parameter is received. Alternatively, the calculation instruction is processed after the instruction for reading the key parameter is received, and then the generated key parameter is transmitted to the print imaging device. Alternatively, the calculation is performed in accordance with the preset rule after the instruction for reading the key parameter is received, and the generated key parameter is then transmitted to the print imaging device. The calculation instruction may be registered before the instruction for reading the key parameter is received, and the calculation instruction is processed once the key parameter reading instruction is received.

In addition, in order to protect the generated parameter from being reading by the print imaging device in an inappropriate case, the storage chip in the embodiment further includes a check unit 406, adapted to check the key parameter before the transmitting unit 404 transmits the key parameter to the print imaging device, and the transmitting unit 404 transmits the key parameter to the print imaging device via the interface unit 401 in a case that the key parameter is checked to be legal.

It should be noted that the process of determining whether the key parameter is legal includes: prestoring a check value in the storage chip; and determining that a check value of the key parameter is the stored check value. The check value of the key parameter may be obtained by performing a parity check, a summation check, or MD5 check on the key parameter.

In addition, in order to improve a confidentiality of the key parameter, an incomplete parameter may also be prestored in the storage chip. The calculation result is a part of the key parameter, and the other part of the key parameter is the incomplete parameter.

The storage unit 405 is further adapted to prestore the incomplete parameter.

It should be illustrated that the calculating module in the embodiment may further include an integrating submodule 403a1 adapted to integrate the prestored incomplete parameter with the calculation result, to obtain the key parameter.

The process of generating the key parameter in the above example is illustrated by the preset rule. In order to improve the confidentiality of the key parameter, multiple (two or more) different preset rules may be stored in the storage unit, key parameters suitable for different print imaging devices may be generated in accordance with the multiple preset rules, respectively.

The process of performing, by the parameter generating unit, a calculation in accordance with the preset rule to generate a calculation result may include:
performing, by the parameter generating unit, the calculation, in accordance with multiple preset rules, to generate multiple calculation results corresponding to the multiple preset rules;
transmitting, by the transmitting unit, one of the multiple calculation results to the print imaging device when the print imaging device transmits one instruction for reading the key parameter, that is, when the storage chip receives the instruction for reading the key parameter, until the print imaging device stops to transmit the instruction for reading the key parameter. Once the key parameter reading instruction is received, the storage chip may transmit one of the multiple calculation results, and the multiple calculation results are transmitted in order.

It should be noted that the above embodiments of the storage chip are described by virtual hardware units. It may be understood that the above embodiments of the application may also be realized by a hardware entity circuit.

Those skilled in the art will understand that the key parameter may also be generated by a specific hardware circuit, such as a logical operation circuit, a mathematical operation circuit, a shifting processing circuit. If the hardware circuit is applied, it is not necessary to store the preset rule in the non-volatile storage unit, and even the non-volatile storage unit may be omitted. When the storage chip according to the application receives the instruction transmitted by the print imaging device, the instruction is processed directly by the hardware circuit, and processed output information (i.e. calculation result) is transmitted to the print imaging device as a key parameter, or is integrated with an incomplete parameter and transmitted to the print imaging device. Obviously, the same application effect can be obtained by applying the hardware circuit.

In the embodiment, a function of the parameter generating unit may be realized in a hardware way. As shown in Figure 7, the above storage chip includes an interface unit 401, an instruction processing circuit 23, a calculation result register unit 30 and a result transmitting unit 24.

The instruction processing circuit 23 is adapted to perform an operation or shifting on the received calculation instruction, and generate a calculation result. The instruction processing circuit 23 may be a logical operation circuit, a mathematical operation circuit, a shifting processing circuit or a combination circuit thereof. Taking an algorithm of "calculating a one-complement code of the instruction and subtracting 5 from the one-complement code" in the above embodiment as an example, a function of the algorithm may be realized by the instruction processing circuit including the logical operation circuit (non-operation) and the mathematical operation circuit (subtraction operation).

The result transmitting unit 24 is adapted to transmit the calculation result to the print imaging device based on the received instruction. Since the result calculated by the instruction processing circuit 23 is not data required to be obtained by all instructions, the result transmitting unit 24 determines whether the instruction has a relationship with the calculation result based on the received instruction, and determine whether the calculation result is transmitted to the print imaging device according to the determined result. For example, it is assumed that the calculation result is data related to a serial number, i.e. the key parameter. If the instruction for reading the key parameter is received to read data including the serial number of the storage chip, the calculation result is transmitted to the print imaging device; and if other instruction such as the instruction for reading the non-key parameter is received, the calculation result is not transmitted to the print imaging device.

The instruction processing circuit 23 generally has a function for temporarily storing data, and thus the calculation result generated by the instruction processing circuit 23 may be stored temporarily therein. In the case that the instruction processing circuit 23 does not have the function for temporarily storing data, the calculation result may be registered in the calculation result register unit 30 described above.

The calculation result may be a complete key parameter of the imaging cartridge, or may be a part of a key parameter. Therefore, when the calculation result is a complete key parameter, the result transmitting unit transmits to the print imaging device the calculation result as the key parameter of the imaging cartridge.

When the calculation result is a part of the key parameter, the parameter generating unit may further include a non-volatile storage unit, adapted to store an incomplete part of the key parameter of the imaging cartridge. The incomplete part of the key parameter of the imaging cartridge is abbreviated as an incomplete parameter. The result transmitting unit combines the calculation result with the incomplete parameter to obtain a key parameter, and then transmits the key parameter to the print imaging device.

It should be noted that the process of transmitting the obtained key parameter to the print imaging device includes:
transmitting, in bytes, the key parameter to the print imaging device, where the calculation is performed to obtain the calculation result before the instruction for reading the key parameter is received; or
transmitting, in bits, the key parameter to the print imaging device, where the calculation is performed to obtain the calculation result when the instruction for reading the key parameter is received.

A specific way for transmitting the parameter to the print imaging device by the storage chip is introduced below.

Before the instruction for reading the key parameter is received, the calculation instruction is processed in accordance with a preset rule, to obtain a calculation result. Then, the generated key parameter is directly transmitted via a bus when the instruction for reading the key parameter is received.

The embodiment further provides another storage chip of an imaging cartridge, in which instead of generating a key parameter before a instruction for reading the key parameter is received, a bitwise operation is performed in accordance with a preset rule in a real-time manner, to generate each bit of a calculation result and transmit the currently generated bit of the calculation result via a bus, when an instruction for reading a key parameter is received.

The method for transmitting the parameter of the storage chip of the imaging cartridge according to the embodiment includes the following steps, and other parts are similar to various method embodiments described above. The method includes:
receiving an instruction transmitted by the print imaging device;
determining a type of the received instruction, where the type of the instruction includes a calculation instruction, an instruction for reading a non-key parameter and an instruction for reading a key parameter;
extracting data of the calculation instruction from the calculation instruction in accordance with a preset rule, in a case that the type of the instruction is determined as the calculation instruction; and
transmitting, bit by bit, the data extracted from the calculation instruction via a bus, in a case that the received instruction is the instruction for reading the key parameter. Since multi bits of the data extracted from the calculation instruction may compose the key parameter, the print imaging device may receive the key parameter via the bus.

Preferably, the data is extracted from the calculation instruction bit by bit.

### First embodiment of imaging cartridge

Based on the method for generating and transmitting the parameter of the storage chip of the imaging cartridge and the storage chip according to the above embodiments, the embodiments of the application further provide an imaging cartridge.

The imaging cartridge includes the storage chip provided by any one of the above embodiments.

The imaging cartridge is connected to a print imaging device. When the print imaging device reads the key parameter of the storage chip of the imaging cartridge, the key parameter of the storage chip may be protected from being acquired maliciously, due to the key parameter generated by the storage chip.

Since the print imaging device is connected to the storage chip of the imaging cartridge via the bus, the storage chip transmits the key parameter and non-key parameter via the bus, and the print imaging device receives the data via the bus in various embodiments described above. In the case that multiple imaging cartridges are installed in the print imaging device, the storage chips of the multiple imaging cartridges may be connected to the print imaging device via a common bus.

The foregoing are only preferred embodiments of the application, which thus are not intended to limit the application. Although the application is illustrated as the preferred embodiments as shown above, the preferred embodiments are not limited to the application. Those skilled in the art may make multiple possible changes and modifications to the technical solution of the application, or change the technical solution of the application into equivalent embodiments having equivalent changes by taking advantage of the method and the technical content disclosed above without departing from the scope of the technical solution of the application. Therefore, any simple alternations, equivalent changes and modifications made to the above embodiments according to the technical essence of the application and without departing from the technical solution of the application will also fall in the scope of protection of the application solution of the application.

## Claims

1. A method for transmitting a parameter of a storage chip of an imaging cartridge, comprising:
receiving an instruction transmitted by a print imaging device (S101); and
determining that the instruction is an instruction for reading a key parameter, and transmitting the key parameter to the print imaging device, wherein the key parameter is generated by the storage chip (S102),
and wherein the key parameter is fixed information comprising a serial number of the imaging cartridge;
wherein a process of generating the key parameter by the storage chip comprises:
performing a calculation in accordance with a preset rule based on prestored reference data and a calculation instruction transmitted by the print imaging device to generate a calculation result; and generating the key parameter from the calculation result, wherein the instruction further comprises the calculation instruction;
performing a calculation in accordance with a preset rule based on a calculation instruction transmitted by the print imaging device, to generate a calculation result; and generating the key parameter from the calculation result, wherein the instruction further comprises the calculation instruction; or
performing a calculation in accordance with a preset rule based on prestored reference data, to generate a calculation result; and generating the key parameter from the calculation result (S302);
wherein the performing the calculation in accordance with the preset rule to generate the calculation result comprises:
performing the calculation in accordance with a plurality of different preset rules, to generate
a plurality of calculation results corresponding to the plurality of different preset rules, and
transmitting one of the plurality of calculation results to the print imaging device every time one instruction for reading the key parameter is transmitted by the print imaging device, until the print imaging device stops to transmit the instruction for reading the key parameter;
wherein the plurality of calculation results constitutes a plurality of key parameters, generated in accordance with the plurality of different preset rules, which are suitable for different models of print imaging devices respectively.

2. The method for transmitting the parameter of the storage chip of the imaging cartridge according to claim 1, wherein the key parameter further comprises a brand, a toner or ink capacity and a production data of the imaging cartridge.

3. The method for transmitting the parameter of the storage chip of the imaging cartridge according to claim 1 or claim 2, wherein the instruction further comprises an instruction for reading a non-key parameter, and the non-key parameter is a parameter prestored in the storage chip; the method further comprises:
determining that the instruction is the instruction for reading the non-key parameter; and transmitting the prestored non-key parameter to the print imaging device (S203);
wherein the non-key parameter is variable information comprising an ink remaining amount, the number of printed pages, a consumption amount of a toner and an initial first installation date of the imaging cartridge.

4. The method for transmitting the parameter of the storage chip of the imaging cartridge according to claim 1, wherein before the performing the calculation, the method further comprises:
caching the calculation instruction.

5. The method for transmitting the parameter of the storage chip of the imaging cartridge according to claim 3, wherein before the transmitting the key parameter to the print imaging device, the method further comprises:
determining whether the key parameter is legal, and transmitting the key parameter to the print imaging device in a case that the key parameter is legal.

6. The method for transmitting the parameter of the storage chip of the imaging cartridge according to claim 1, wherein the transmitting the key parameter to the print imaging device comprises:
Transmitting (S304), in bytes, the key parameter to the print imaging device, wherein the calculation is performed to obtain the calculation result before the instruction for reading the key parameter is received; or
transmitting, in bits, the key parameter to the print imaging device, wherein the calculation is performed to obtain the calculation result when the instruction for reading the key parameter is received.

7. The method for transmitting the parameter of the storage chip of the imaging cartridge according to claim 1, wherein the preset rule comprises at least one of a logical operation, a mathematical operation, an operation for replacing data, an operation for shifting data or an operation for reordering data.

8. A storage chip of an imaging cartridge, comprising: an interface unit (401), a determining unit (402), a parameter generating unit (403) and a transmitting unit (404); wherein
the interface unit (401) is adapted to receive an instruction transmitted by a print imaging device;
the determining unit (402) is adapted to determine a type of the instruction;
the transmitting unit (404) is adapted to transmit a key parameter to the print imaging device through the interface unit (401), in a case that the determining unit (402) determines that the instruction is an instruction for reading the key parameter; and
the parameter generating unit (403) is adapted to generate the key parameter,
wherein the key parameter is fixed information comprising a serial number of the imaging cartridge;
wherein the parameter generating unit (403) comprises a calculating module (403a) that is adapted to:
perform a calculation in accordance with a preset rule based on prestored reference data and a calculation instruction transmitted by the print imaging device, to generate a calculation result; and generate the key parameter from the calculation result; wherein a type of the instruction further comprises the calculation instruction;
perform a calculation in accordance with a preset rule based on a calculation instruction transmitted by the print imaging device, to generate a calculation result; and generate the key parameter from the calculation result; wherein a type of the instruction further comprises the calculation instruction; or
perform a calculation in accordance with a preset rule based on prestored reference data, to generate a calculation result; and generate the key parameter from the calculation result;
wherein the storage unit (405) is further adapted to cache the calculation instruction;
wherein the parameter generating unit (403) adapted to perform the calculation in accordance with the preset rule, to generate the calculation result is further adapted to:
perform the calculation in accordance with a plurality of different preset rules, to generate a plurality of calculation results corresponding to the plurality of different preset rules; and wherein
the transmitting unit (404) transmits one of the plurality of calculation results to the print imaging device every time one instruction for reading the key parameter is transmitted by the print imaging device, until the print imaging device stops to transmit the instruction for reading the key parameter;
wherein the plurality of calculation results constitutes a plurality of key parameters, generated in accordance with the plurality of different preset rules, which are suitable for different models of print imaging devices respectively.

9. The storage chip of the imaging cartridge according to claim 8, wherein the key parameter further comprises a brand, a toner or ink capacity and a production data of the imaging cartridge.

10. The storage chip of the imaging cartridge according to claim 8 or claim 9, further comprising a storage unit (405), wherein
the storage unit (405) is adapted to prestore a non-key parameter;
the transmitting unit (404) is adapted to transmit the non-key parameter to the print imaging device via the interface unit, in a case that the determining unit determine that the instruction is an instruction for reading the non-key parameter;
wherein the non-key parameter is variable information comprising an ink remaining amount, the number of printed pages, a consumption amount of a toner and an initial first installation date of the imaging cartridge.

11. The storage chip of the imaging cartridge according to claim 10, further comprising a check unit (406) adapted to check the key parameter before the transmitting unit (404) transmits the key parameter to the print imaging device, and wherein the transmitting unit (404) transmits the key parameter to the print imaging device in a case that the key parameter is checked to be legal.

12. The storage chip of the imaging cartridge according to claim 8 or claim 9, wherein the transmitting unit (404) being adapted to transmit the key parameter to the print imaging device is further adapted to:
transmit, in bytes, the key parameter to the print imaging device, wherein the parameter generating unit (403) performs the calculation before the instruction for reading the key parameter is received by the interface unit (401); or
transmit, in bits, the key parameter to the print imaging device, wherein the parameter generating unit (403) performs the calculation when the instruction for reading the key parameter is received by the interface unit (401).

13. The storage chip of the imaging cartridge according to claim 8, wherein the preset rule comprises at least one of a logical operation, a mathematical operation, an operation for replacing data, an operation for shifting data or an operation for reordering data.

14. An imaging cartridge comprising the storage chip according to any one of claims 8 to 13.

## Patentansprüche

1. Verfahren zum Übertragen eines Parameters eines Speicherchips einer Abbildungskassette, das Folgendes umfasst:
Empfangen einer Anweisung, die durch eine Druckabbildungsvorrichtung übertragen wird (S101); und
Bestimmen, dass die Anweisung eine Anweisung zum Lesen eines Schlüsselparameters ist, und Übertragen des Schlüsselparameters an die Druckabbildungsvorrichtung, wobei der Schlüsselparameter durch den Speicherchip erzeugt wird (S102),
und wobei der Schlüsselparameter feste Informationen sind, die eine Seriennummer der Abbildungskassette umfassen;
wobei ein Vorgang zum Erzeugen des Schlüsselparameters durch den Speicherchip Folgendes umfasst:
Durchführen einer Berechnung gemäß einer voreingestellten Regel basierend auf vorgespeicherten Referenzdaten und einer durch die Druckabbildungsvorrichtung übertragenen Berechnungsanweisung, um ein Berechnungsergebnis zu erzeugen; und Erzeugen des Schlüsselparameters aus dem Berechnungsergebnis, wobei die Anweisung ferner die Berechnungsanweisung umfasst;
Durchführen einer Berechnung gemäß einer voreingestellten Regel basierend auf einer durch die Druckabbildungsvorrichtung übertragenen Berechnungsanweisung, um ein Berechnungsergebnis zu erzeugen; und Erzeugen des Schlüsselparameters aus dem Berechnungsergebnis, wobei die Anweisung ferner die Berechnungsanweisung umfasst; oder
Durchführen einer Berechnung gemäß einer voreingestellten Regel basierend auf vorgespeicherten Referenzdaten, um ein Berechnungsergebnis zu erzeugen; und Erzeugen des Schlüsselparameters aus dem Berechnungsergebnis (S302);
wobei das Durchführen der Berechnung gemäß der voreingestellten Regel, um das Berechnungsergebnis zu erzeugen, Folgendes umfasst:
Durchführen der Berechnung gemäß mehreren unterschiedlichen voreingestellten Regeln, um mehrere Berechnungsergebnisse zu erzeugen, die den mehreren unterschiedlichen voreingestellten Regeln entsprechen, und
Übertragen eines der mehreren Berechnungsergebnisse an die Druckabbildungsvorrichtung jedes Mal, wenn eine Anweisung zum Lesen des Schlüsselparameters durch die Druckabbildungsvorrichtung übertragen wird, bis die Druckabbildungsvorrichtung aufhört, die Anweisung zum Lesen des Schlüsselparameters zu übertragen;
wobei die mehreren Berechnungsergebnisse mehrere Schlüsselparameter darstellen, die gemäß den mehreren unterschiedlichen voreingestellten Regeln erzeugt werden, die jeweils für unterschiedliche Modelle von Druckabbildungsvorrichtungen geeignet sind.

2. Verfahren zum Übertragen des Parameters des Speicherchips der Abbildungskassette nach Anspruch 1, wobei der Schlüsselparameter ferner eine Marke, eine Toner- oder Tintenkapazität und Produktionsdaten der Abbildungskassette umfasst.

3. Verfahren zum Übertragen des Parameters des Speicherchips der Abbildungskassette nach Anspruch 1 oder 2, wobei die Anweisung ferner eine Anweisung zum Lesen eines Nicht-Schlüsselparameters umfasst und der Nicht-Schlüsselparameter ein in dem Speicherchip vorgespeicherter Parameter ist; wobei das Verfahren ferner Folgendes umfasst:
Bestimmen, dass die Anweisung die Anweisung zum Lesen des Nicht-Schlüsselparameters ist; und Übertragen des vorgespeicherten Nicht-Schlüsselparameters an die Druckabbildungsvorrichtung (S203);
wobei der Nicht-Schlüsselparameter variable Informationen sind, die eine Tintenrestmenge, die Anzahl der gedruckten Seiten, eine Verbrauchsmenge eines Toners und ein anfängliches erstes Installationsdatum der Abbildungskassette umfassen.

4. Verfahren zum Übertragen des Parameters des Speicherchips der Abbildungskassette nach Anspruch 1, wobei das Verfahren vor dem Durchführen der Berechnung ferner Folgendes umfasst:
Zwischenspeichern der Berechnungsanweisung.

5. Verfahren zum Übertragen des Parameters des Speicherchips der Abbildungskassette nach Anspruch 3, wobei das Verfahren vor dem Übertragen des Schlüsselparameters an die Druckabbildungsvorrichtung ferner Folgendes umfasst:
Bestimmen, ob der Schlüsselparameter zulässig ist, und Übertragen des Schlüsselparameters an die Druckabbildungsvorrichtung, falls der Schlüsselparameter zulässig ist.

6. Verfahren zum Übertragen des Parameters des Speicherchips der Abbildungskassette nach Anspruch 1, wobei das Übertragen des Schlüsselparameters an die Druckabbildungsvorrichtung Folgendes umfasst:
Übertragen (S304) des Schlüsselparameters in Bytes an die Druckabbildungsvorrichtung, wobei die Berechnung durchgeführt wird, um das Berechnungsergebnis zu erhalten, bevor die Anweisung zum Lesen des Schlüsselparameters empfangen wird; oder
Übertragen des Schlüsselparameters in Bits an die Druckabbildungsvorrichtung, wobei die Berechnung durchgeführt wird, um das Berechnungsergebnis zu erhalten, wenn die Anweisung zum Lesen des Schlüsselparameters empfangen wird.

7. Verfahren zum Übertragen des Parameters des Speicherchips der Abbildungskassette nach Anspruch 1, wobei die voreingestellte Regel eine logische Operation, eine mathematische Operation, eine Operation zum Ersetzen von Daten, eine Operation zum Verschieben von Daten und/oder eine Operation zum Neuanordnen von Daten umfasst.

8. Speicherchip einer Abbildungskassette, der Folgendes umfasst: eine Schnittstelleneinheit (401), eine Bestimmungseinheit (402), eine Parametererzeugungseinheit (403) und eine Übertragungseinheit (404); wobei
die Schnittstelleneinheit (401) angepasst ist, um eine Anweisung zu empfangen, die durch eine Druckabbildungsvorrichtung übertragen wird;
die Bestimmungseinheit (402) angepasst ist, um eine Art der Anweisung zu bestimmen;
die Übertragungseinheit (404) angepasst ist, um einen Schlüsselparameter über die Schnittstelleneinheit (401) an die Druckabbildungsvorrichtung zu übertragen, falls die Bestimmungseinheit (402) bestimmt, dass die Anweisung eine Anweisung zum Lesen des Schlüsselparameters ist; und
die Parametererzeugungseinheit (403) angepasst ist, um den Schlüsselparameter zu erzeugen,
wobei der Schlüsselparameter feste Informationen sind, die eine Seriennummer der Abbildungskassette umfassen;
wobei die Parametererzeugungseinheit (403) ein Berechnungsmodul (403a) umfasst, das für Folgendes angepasst ist:
Durchführen einer Berechnung gemäß einer voreingestellten Regel basierend auf vorgespeicherten Referenzdaten und einer durch die Druckabbildungsvorrichtung übertragenen Berechnungsanweisung, um ein Berechnungsergebnis zu erzeugen; und Erzeugen des Schlüsselparameters aus dem Berechnungsergebnis; wobei eine Art der Anweisung ferner die Berechnungsanweisung umfasst;
Durchführen einer Berechnung gemäß einer voreingestellten Regel basierend auf einer durch die Druckabbildungsvorrichtung übertragenen Berechnungsanweisung, um ein Berechnungsergebnis zu erzeugen; und Erzeugen des Schlüsselparameters aus dem Berechnungsergebnis; wobei eine Art der Anweisung ferner die Berechnungsanweisung umfasst; oder
Durchführen einer Berechnung gemäß einer voreingestellten Regel basierend auf vorgespeicherten Referenzdaten, um ein Berechnungsergebnis zu erzeugen; und Erzeugen des Schlüsselparameters aus dem Berechnungsergebnis;
wobei die Speichereinheit (405) ferner angepasst ist, um die Berechnungsanweisung zwischenzuspeichern;
wobei die Parametererzeugungseinheit (403), die angepasst ist, um die Berechnung gemäß der voreingestellten Regel durchzuführen, um das Berechnungsergebnis zu erzeugen, ferner für Folgendes angepasst ist:
Durchführen der Berechnung gemäß mehreren unterschiedlichen voreingestellten Regeln, um mehrere Berechnungsergebnisse zu erzeugen, die den mehreren unterschiedlichen voreingestellten Regeln entsprechen; und wobei
die Übertragungseinheit (404) jedes Mal, wenn eine Anweisung zum Lesen des Schlüsselparameters durch die Druckabbildungsvorrichtung übertragen wird, eines der mehreren Berechnungsergebnisse an die Druckabbildungsvorrichtung überträgt, bis die Druckabbildungsvorrichtung aufhört, die Anweisung zum Lesen des Schlüsselparameters zu übertragen;
wobei die mehreren Berechnungsergebnisse mehrere Schlüsselparameter darstellen, die gemäß den mehreren unterschiedlichen voreingestellten Regeln erzeugt werden, die jeweils für unterschiedliche Modelle von Druckabbildungsvorrichtungen geeignet sind.

9. Speicherchip der Abbildungskassette nach Anspruch 8, wobei der Schlüsselparameter ferner eine Marke, eine Toner- oder Tintenkapazität und Produktionsdaten der Abbildungskassette umfasst.

10. Speicherchip der Abbildungskassette nach Anspruch 8 oder 9, der ferner eine Speichereinheit (405) umfasst, wobei
die Speichereinheit (405) angepasst ist, um einen Nicht-Schlüsselparameter vorzuspeichern;
die Übertragungseinheit (404) angepasst ist, um den Nicht-Schlüsselparameter über die Schnittstelleneinheit an die Druckabbildungsvorrichtung zu übertragen, falls die Bestimmungseinheit bestimmt, dass die Anweisung eine Anweisung zum Lesen des Nicht-Schlüsselparameters ist;
wobei der Nicht-Schlüsselparameter variable Informationen sind, die eine Tintenrestmenge, die Anzahl der gedruckten Seiten, eine Verbrauchsmenge eines Toners und ein anfängliches erstes Installationsdatum der Abbildungskassette umfassen.

11. Speicherchip der Abbildungskassette nach Anspruch 10, der ferner eine Prüfeinheit (406) umfasst, die angepasst ist, um den Schlüsselparameter zu prüfen, bevor die Übertragungseinheit (404) den Schlüsselparameter an die Druckabbildungsvorrichtung überträgt, und wobei die Übertragungseinheit (404) den Schlüsselparameter an die Druckabbildungsvorrichtung überträgt, falls geprüft wird, dass der Schlüsselparameter zulässig ist.

12. Speicherchip der Abbildungskassette nach Anspruch 8 oder 9, wobei die Übertragungseinheit (404), die angepasst ist, um den Schlüsselparameter an die Druckabbildungsvorrichtung zu übertragen, ferner für Folgendes angepasst ist:
Übertragen des Schlüsselparameters in Bytes an die Druckabbildungsvorrichtung, wobei die Parametererzeugungseinheit (403) die Berechnung durchführt, bevor die Anweisung zum Lesen des Schlüsselparameters durch die Schnittstelleneinheit (401) empfangen wird; oder
Übertragen des Schlüsselparameters in Bits an die Druckabbildungsvorrichtung, wobei die Parametererzeugungseinheit (403) die Berechnung durchführt, wenn die Anweisung zum Lesen des Schlüsselparameters durch die Schnittstelleneinheit (401) empfangen wird.

13. Speicherchip der Abbildungskassette nach Anspruch 8, wobei die voreingestellte Regel eine logische Operation, eine mathematische Operation, eine Operation zum Ersetzen von Daten, eine Operation zum Verschieben von Daten und/oder eine Operation zum Neuanordnen von Daten umfasst.

14. Abbildungskassette, die den Speicherchip nach einem der Ansprüche 8 bis 13 umfasst.

## Revendications

1. Procédé destiné à la transmission d'un paramètre d'une puce de stockage d'une cartouche d'imagerie, comprenant :
la réception d'une instruction transmise par un dispositif d'imagerie d'impression (S101); et
la détermination selon laquelle l'instruction est une instruction destinée à la lecture d'un paramètre clé, et la transmission du paramètre clé au dispositif d'imagerie d'impression, le paramètre clé étant généré par la puce de stockage (S102),
et le paramètre clé étant des informations fixes comprenant un numéro de série de la cartouche d'imagerie ;
un processus de génération du paramètre clé par la puce de stockage comprenant :
le fait d'effectuer un calcul conformément à une règle prédéfinie sur la base de données de référence pré-mémorisées et d'une instruction de calcul transmise par le dispositif d'imagerie d'impression pour générer un résultat de calcul ; et la génération du paramètre clé à partir du résultat de calcul, l'instruction comprenant en outre l'instruction de calcul ;
le fait d'effectuer un calcul conformément à une règle prédéfinie sur la base d'une instruction de calcul transmise par le dispositif d'imagerie d'impression, pour générer un résultat de calcul ; et la génération du paramètre clé à partir du résultat de calcul, l'instruction comprenant en outre l'instruction de calcul ; ou
le fait d'effectuer un calcul conformément à une règle prédéfinie sur la base de données de référence pré-mémorisées, pour générer un résultat de calcul ; et la génération du paramètre clé à partir du résultat de calcul (S302) ;
le fait d'effectuer le calcul conformément à la règle prédéfinie pour générer le résultat de calcul comprenant :
le fait d'effectuer le calcul conformément à une pluralité de règles prédéfinies différentes, pour générer une pluralité de résultats de calcul correspondant à la pluralité de règles prédéfinies différentes, et
la transmission de l'un de la pluralité de résultats de calcul au dispositif d'imagerie d'impression à chaque fois qu'une instruction destinée à la lecture du paramètre clé est transmise par le dispositif d'imagerie d'impression, jusqu'à ce que le dispositif d'imagerie d'impression s'arrête pour transmettre l'instruction destinée à la lecture du paramètre clé ;
la pluralité de résultats de calcul constituant une pluralité de paramètres clés, générés conformément à la pluralité de règles prédéfinies différentes, qui sont appropriées pour différents modèles de dispositifs d'imagerie d'impression respectivement.

2. Procédé destiné à la transmission du paramètre de la puce de stockage de la cartouche d'imagerie selon la revendication 1, le paramètre clé comprenant en outre une marque, une capacité d'encre en poudre ou d'encre et des données de production de la cartouche d'imagerie.

3. Procédé destiné à la transmission du paramètre de la puce de stockage de la cartouche d'imagerie selon la revendication 1 ou la revendication 2, l'instruction comprenant en outre une instruction destinée à la lecture d'un paramètre non-clé, et le paramètre non-clé étant un paramètre pré-mémorisé dans la puce de stockage ; le procédé comprenant en outre :
la détermination selon laquelle l'instruction est l'instruction destinée à la lecture du paramètre non-clé ; et la transmission du paramètre non-clé pré-mémorisé au dispositif d'imagerie d'impression (S203) ;
le paramètre non-clé étant des informations variables comprenant une quantité d'encre restante, le nombre de pages imprimées, une quantité de consommation d'encre en poudre et une première date d'installation initiale de la cartouche d'imagerie.

4. Procédé destiné à la transmission du paramètre de la puce de stockage de la cartouche d'imagerie selon la revendication 1, avant le fait d'effectuer le calcul, le procédé comprenant en outre :
la mise en cache de l'instruction de calcul.

5. Procédé destiné à la transmission du paramètre de la puce de stockage de la cartouche d'imagerie selon la revendication 3, avant la transmission du paramètre clé au dispositif d'imagerie d'impression, le procédé comprenant en outre :
la détermination du fait de savoir si le paramètre clé est légal, et la transmission du paramètre clé au dispositif d'imagerie d'impression dans un cas où le paramètre clé est légal.

6. Procédé destiné à la transmission du paramètre de la puce de stockage de la cartouche d'imagerie selon la revendication 1, la transmission du paramètre clé au dispositif d'imagerie d'impression comprenant :
la transmission (S304), en octets, du paramètre clé au dispositif d'imagerie d'impression, le calcul étant effectué pour obtenir le résultat de calcul avant que l'instruction destinée à la lecture du paramètre clé ne soit reçue ; ou
la transmission, en bits, du paramètre clé au dispositif d'imagerie d'impression, le calcul étant effectué pour obtenir le résultat de calcul lorsque l'instruction destinée à la lecture du paramètre clé est reçue.

7. Procédé destiné à la transmission du paramètre de la puce de stockage de la cartouche d'imagerie selon la revendication 1, la règle prédéfinie comprenant une opération logique, et/ou une opération mathématique, et/ou une opération destinée au remplacement de données, et/ou une opération destinée au décalage de données, et/ou une opération destinée à la réorganisation de données.

8. Puce de stockage d'une cartouche d'imagerie, comprenant : une unité d'interface (401), une unité de détermination (402), une unité de génération de paramètres (403) et une unité de transmission (404) ;
l'unité d'interface (401) étant adaptée pour recevoir une instruction transmise par un dispositif d'imagerie d'impression ;
l'unité de détermination (402) étant adaptée pour déterminer un type de l'instruction ;
l'unité de transmission (404) étant adaptée pour transmettre un paramètre clé au dispositif d'imagerie d'impression par l'intermédiaire de l'unité d'interface (401), dans un cas où l'unité de détermination (402) détermine que l'instruction est une instruction destinée à la lecture du paramètre clé ; et
l'unité de génération de paramètres (403) étant adaptée pour générer le paramètre clé,
le paramètre clé étant des informations fixes comprenant un numéro de série de la cartouche d'imagerie ;
l'unité de génération de paramètres (403) comprenant un module de calcul (403a) qui est adapté pour :
effectuer un calcul conformément à une règle prédéfinie sur la base de données de référence pré-mémorisées et d'une instruction de calcul transmise par le dispositif d'imagerie d'impression, pour générer un résultat de calcul ; et générer le paramètre clé à partir du résultat du calcul ; un type de l'instruction comprenant en outre l'instruction de calcul ;
effectuer un calcul conformément à une règle prédéfinie sur la base d'une instruction de calcul transmise par le dispositif d'imagerie d'impression, pour générer un résultat de calcul ; et générer le paramètre clé à partir du résultat du calcul ; un type de l'instruction comprenant en outre l'instruction de calcul ; ou
effectuer un calcul conformément à une règle prédéfinie sur la base de données de référence pré-mémorisées pour générer un résultat de calcul ; et générer le paramètre clé à partir du résultat du calcul ;
l'unité de stockage (405) étant en outre adaptée pour mettre en cache l'instruction de calcul ;
l'unité de génération de paramètres (403) adaptée pour effectuer le calcul conformément à la règle prédéfinie, pour générer le résultat de calcul étant en outre adaptée pour :
effectuer le calcul conformément à une pluralité de règles prédéfinies différentes, pour générer une pluralité de résultats de calcul correspondant à la pluralité de règles prédéfinies différentes ; et
l'unité de transmission (404) transmettant l'un de la pluralité de résultats de calcul au dispositif d'imagerie d'impression chaque fois qu'une instruction destinée à la lecture du paramètre clé est transmise par le dispositif d'imagerie d'impression, jusqu'à ce que le dispositif d'imagerie d'impression s'arrête pour transmettre l'instruction destinée à la lecture du paramètre clé ;
la pluralité de résultats de calcul constituant une pluralité de paramètres clés, générés conformément à la pluralité de règles prédéfinies différentes, qui sont appropriées pour différents modèles de dispositifs d'imagerie d'impression respectivement.

9. Puce de stockage de la cartouche d'imagerie selon la revendication 8, le paramètre clé comprenant en outre une marque, une capacité d'encre en poudre ou d'encre et des données de production de la cartouche d'imagerie.

10. Puce de stockage de la cartouche d'imagerie selon la revendication 8 ou la revendication 9, comprenant en outre une unité de stockage (405),
l'unité de stockage (405) étant adaptée pour pré-mémoriser un paramètre non-clé ;
l'unité de transmission (404) étant adaptée pour transmettre le paramètre non-clé au dispositif d'imagerie d'impression par l'intermédiaire de l'unité d'interface, dans un cas où l'unité de détermination détermine que l'instruction est une instruction destinée à la lecture du paramètre non-clé ;
le paramètre non-clé étant des informations variables comprenant une quantité d'encre restante, le nombre de pages imprimées, une quantité de consommation d'encre en poudre et une première date d'installation initiale de la cartouche d'imagerie.

11. Puce de stockage de la cartouche d'imagerie selon la revendication 10, comprenant en outre une unité de vérification (406) adaptée pour vérifier le paramètre clé avant que l'unité de transmission (404) ne transmette le paramètre clé au dispositif d'imagerie d'impression, et l'unité de transmission (404) transmettant le paramètre clé au dispositif d'imagerie d'impression dans un cas où le paramètre clé est vérifié comme étant légal.

12. Puce de stockage de la cartouche d'imagerie selon la revendication 8 ou la revendication 9, l'unité de transmission (404) adaptée pour transmettre le paramètre clé au dispositif d'imagerie d'impression étant en outre adaptée pour :
transmettre, en octets, le paramètre clé au dispositif d'imagerie d'impression, l'unité de génération de paramètres (403) effectuant le calcul avant que l'instruction destinée à la lecture du paramètre clé ne soit reçue par l'unité d'interface (401) ; ou
transmettre, en bits, le paramètre clé au dispositif d'imagerie d'impression, l'unité de génération de paramètres (403) effectuant le calcul lorsque l'instruction destinée à la lecture du paramètre clé est reçue par l'unité d'interface (401).

13. Puce de stockage de la cartouche d'imagerie selon la revendication 8, la règle prédéfinie comprenant une opération logique, et/ou une opération mathématique, et/ou une opération destinée au remplacement de données, et/ou une opération destinée au décalage de données, et/ou une opération destinée à la réorganisation de données.

14. Cartouche d'imagerie comprenant la puce de stockage selon l'une quelconque des revendications 8 à 13.
